# EUROPEAN PATENT APPLICATION

(11) **EP 1 747 720 A1**
(43) Date of publication of application: **31.01.2007**
(21) Application number: 06253879.8
(22) Date of filing: 25.07.2006
(51) Int. Cl.: A01K 13/00

(54) **Canine footwear**

(30) Priority: 26.07.2005 US 189270
(71) Applicant: Inafiction U.S.A., Inc., Los Angeles, CA 90010 (US)
(72) Inventor: Yun, Yeu Hoon, Beverly Hills, CA 90211 (US); Ynostroza, John-Carlos, Piedmont, CA 94610 (US)
(74) Representative: Price, Paul Anthony King

(57) **Abstract**

A dog shoe (10) is configured to be worn by a dog (12) and comprises a rubberized sole (16) sized for a foot of a dog. The rubberized sole (16) includes a toe portion and a heel portion which is raised in relation to the toe portion. A shoe wall (14) is made of a flexible material and is coupled to the upper perimeter of the rubberized sole (16). A zipper (26) is used to open and close an elongate opening in an upper portion of the shoe wall (14). The zipper (26) is also configured to open and close an adjustable ankle opening in the upper portion of the shoe wall (14). An elastic ankle cinch (28) is mounted to the upper portion of the shoe wall (14) and is configured to cinch open and close the adjustable ankle opening.

## Description

### Priority Application

U.S. Patent Application 11/189,270 is a continuation-in-part application of U.S. Patent Application 11/095,927 (filed 31 March 2005), which claims the benefit of U.S. Provisional Patent Application 60/589,506 (filed 19 July 2004). The entire disclosure of both of these applications is hereby incorporated by reference herein.

### Field of the Invention

The present invention relates generally to canine footwear, and more specifically to canine footwear with improved features such as comfort, durability and appearance.

### Background of the Invention

Canine footwear has been developed to mitigate the discomfort that dogs experience when standing, walking or running on certain surfaces, such as hot pavement, snow or rough surfaces. Furthermore, it should be noted that the advantages derived from canine footwear are not limited to the dog wearing the footwear. Specifically, canine footwear provides utility in the sense of decorations to help fulfill some sort of anthropomorphic kinship satisfaction to the dog owner.

Disadvantageously, many conventional canine footwear designs do not adequately meet the unique shape and needs of dog paws and legs. Further, many conventional canine footwear designs do not provide adequate durability and do not sufficiently protect a dog's paws from sharp objects on the ground, such as broken glass.

### Summary of the Invention

In view of the numerous advantages that canine footwear provides, several different types of canine footwear have been developed. However, many conventional forms of canine footwear suffer from significant disadvantages, such as a tendency to twist or slide off the dog's paw during certain activities, a failure to provide adequate ventilation to the dog's foot, and an inability to easily insert or remove the dog's foot from the shoe. These and other deficiencies are addressed by various embodiments of the canine footwear disclosed herein. However, not all embodiments need address all deficiencies.

In one embodiment of the present invention, a dog shoe that is configured to be worn by a dog comprises a rubberized sole sized for a foot of a dog. The rubberized sole has an exterior portion and an upper portion opposite the exterior portion. The rubberized sole further includes a heel portion and a toe portion. The heel portion is raised in relation to the toe portion. The dog shoe further comprises a shoe wall that comprises a flexible material and that is coupled to at least a perimeter portion of the upper portion of the rubberized sole. The shoe wall includes an elongate opening along an upper portion thereof. The dog shoe further comprises a zipper that is mounted on opposite sides of the elongate opening in the upper portion of the shoe wall. The zipper is also configured to open and close an adjustable ankle opening in the upper portion of the shoe wall. The dog shoe further comprises an elastic ankle cinch that is mounted to the upper portion of the shoe wall. The elastic cinch is configured to cinch open and close the adjustable ankle opening.

In another embodiment of the present invention, a canine footwear apparatus comprises a rubber sole sized to fit a dog. The rubber sole has a dog toe portion and a dog heel portion opposite the dog toe portion. The dog heel portion is elevated with respect to the toe portion to accommodate a dog's anatomy. The canine footwear apparatus further comprises an upper shoe wall fastened to a perimeter portion of the sole and forming an upper ankle opening. The upper shoe wall is shaped to allow the footwear apparatus to be positioned on a dog foot. The upper shoe wall includes a first wall portion and a second wall portion. The first and second wall portions are at least partially separated. The canine footwear apparatus further comprises a fastener configured to secure the upper shoe first wall portion to the upper shoe second wall portion.

In another embodiment of the present invention, an enclosure for a dog paw comprises a shoe sole sized to fit a dog paw. The shoe sole has a toe portion and a heel portion opposite the toe portion. The dog paw enclosure further comprises a curved sidewall connected to and extending upwardly from a perimeter portion of the shoe sole to an adjustable ankle opening. The curved sidewall comprises a flexible material. The dog paw enclosure further comprises a longitudinally extending closable slit formed in the curved sidewall, and extending from a point adjacent the shoe sole toe portion to the adjustable ankle opening. The dog paw enclosure further comprises a closure device configured to open and close the longitudinally extending closable slit. The dog paw enclosure further comprises an elastic ankle cinch that is mounted to an upper portion of the curved sidewall, and that is configured to cinch open and close the adjustable ankle opening.

In another embodiment of the present invention, a kit comprises two first canine footwear articles having a first size. The kit further comprises two second canine footwear articles having a second size that is larger than the first size. The two first canine footwear articles and the two second canine footwear articles each include a rubberized sole having a raised heel portion. The two first canine footwear articles and the two second canine footwear articles each include a shoe wall that is made of a flexible material and that is attached to a perimeter portion of the rubberized sole. The two first canine footwear articles and the two second canine footwear articles each include an elastic ankle cinch that is mounted to an upper portion of the shoe wall, and that is configured to cinch open and close an adjustable ankle opening in the shoe wall.

### Brief Description of the Drawings

Exemplary embodiments of the improved canine footwear disclosed herein are illustrated in the accompanying drawings, which are for illustrative purposes only. The drawings comprise the following figures, in which like numerals indicate like parts.

Figure 1 is a perspective view of a dog wearing an exemplary embodiment of the improved canine footwear disclosed herein.

Figure 2 is a first side view of an exemplary embodiment of a canine footwear apparatus having an elastic ankle cinching mechanism.

Figure 3 is a second side view of the canine footwear apparatus of Figure 2.

Figure 4 is a front view of the canine footwear apparatus of Figure 2.

Figure 5 is a rear view of the canine footwear apparatus of Figure 2.

Figure 6 is a bottom view of the canine footwear apparatus of Figure 2 illustrating an exemplary sole configuration.

Figure 7 is a first side view of an exemplary embodiment of a canine footwear apparatus having a raised heel.

Figure 8 is a front view of the canine footwear apparatus of Figure 7.

Figure 9 is a rear view of the canine footwear apparatus of Figure 7.

Figure 10 is a bottom view of the canine footwear apparatus of Figure 7 illustrating an exemplary sole configuration.

Figure 11 is a side view of an exemplary embodiment of a canine footwear apparatus having a heel-mounted light.

Figure 12 is a side view of an exemplary embodiment of a canine footwear apparatus having an angle-mounted light.

Figure 13 is a side view of an exemplary embodiment of a canine footwear apparatus having an adjustable ankle strap.

Figure 14 is a rear view of the canine footwear apparatus of Figure 13.

Figure 15A is an open front view of an exemplary embodiment of a canine footwear apparatus that does not include a zipper.

Figure 15B is a closed front view of an exemplary embodiment of a canine footwear apparatus that does not include a zipper, but that does include a secondary strap.

Figure 15C is a side view of the canine footwear apparatus of Figure 15B.

Figure 16 is a perspective view of an exemplary embodiment of a canine footwear apparatus that includes a rear opening.

Figure 17A is a closed front view of an exemplary embodiment of a canine footwear apparatus that includes an elastic portion and an ankle strap.

Figure 17B is an open front view of an exemplary embodiment of a canine footwear apparatus that includes an elastic portion and an ankle strap.

Figure 18 is a side view of a canine footwear apparatus having a raised toe portion of the sole.

Figure 19 is a side view of a canine footwear apparatus including exemplary embodiments of supplementary fitting devices.

### Detailed Description of Preferred Embodiments

In accordance with the foregoing, improved canine footwear has been developed. Certain optional embodiments described herein provide enhanced paw protection and comfort. For example, seeing eye dogs and other service dogs are often subjected to hot, sun-baked pavement surfaces for prolonged periods of time. In some cases, the causes burning, cracking and/or infection of the dog's foot pads. Use of certain footwear embodiments described herein helps to protect the dog's footpads from such effects.

Certain embodiments of the canine footwear described herein also optionally provide dogs with protection from hazards such as thorns, burrs, stinging insects, and salt used in street maintenance during wintry weather. These hazards are particularly bothersome for dogs that spend a large amount of time indoors, because such dogs are unable to develop the tougher paw pads that dogs that spend a large amount of time outdoors have. Moreover, the advantages derived from canine footwear are not limited to providing comfort and protection from adverse environmental conditions. Canine footwear also optionally provides enhanced healing and protection for dogs with paw injuries; improved stability for dogs with arthritic, dysplastic or other conditions that adversely affect their ability to walk; and/or improved mobility for dogs that walk on slippery surfaces, such as hardwood floors or ice.

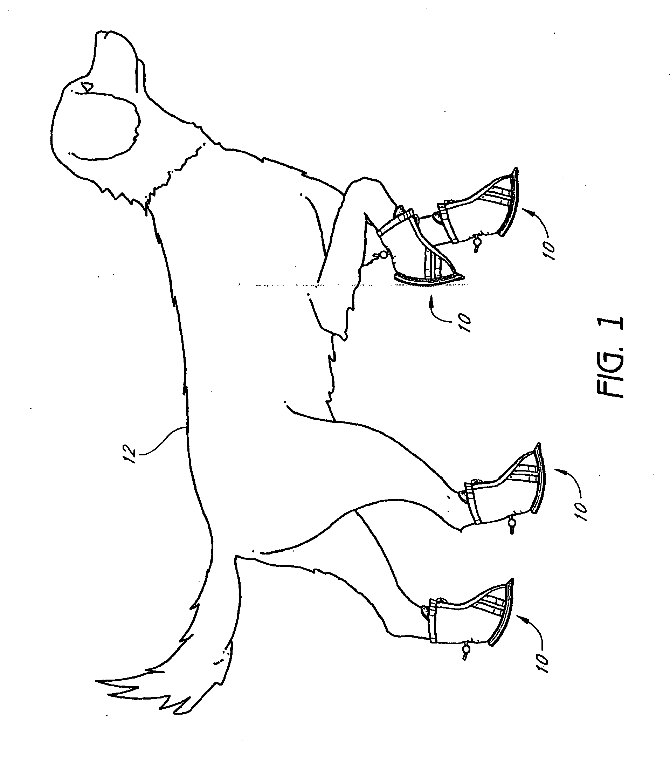

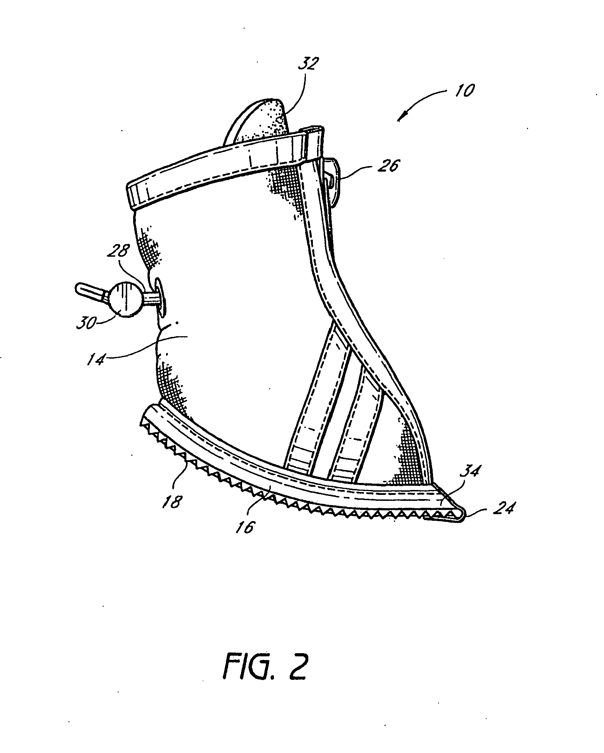

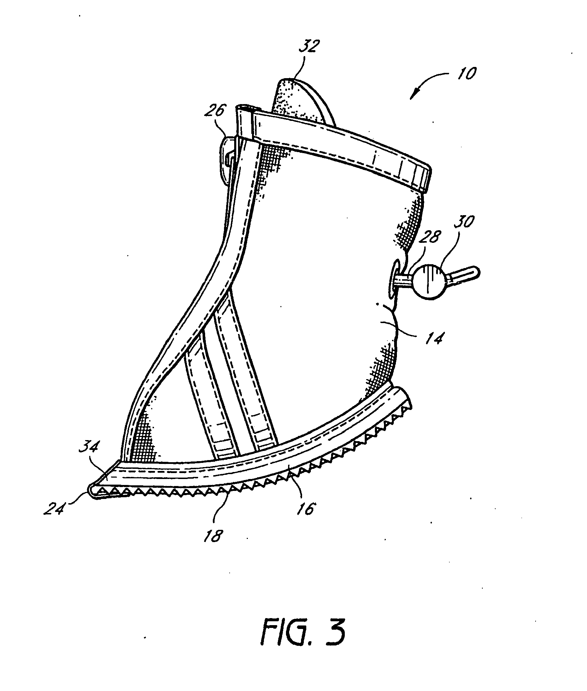

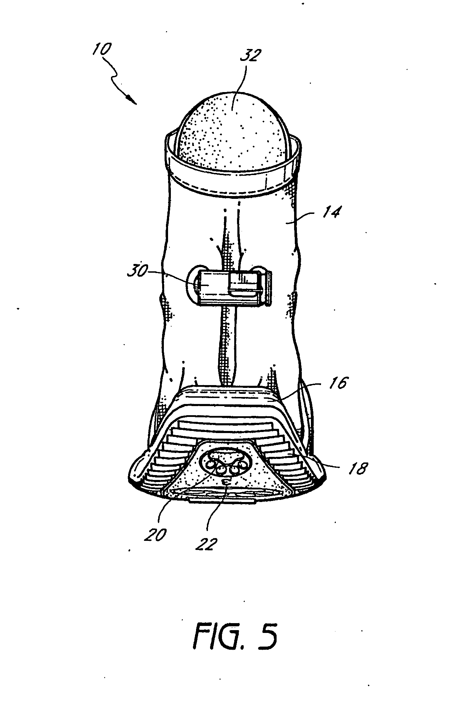

Figure 1 illustrates an exemplary embodiment of canine footwear 10 worn by a dog 12. Certain features of the canine footwear 10 are illustrated in greater detail in Figures 2 through 6.

In an exemplary embodiment, the canine footwear 10 comprises a sole 16 that is made of rubber, although other suitable materials such as leather or canvas are used in other embodiments. For example, in one embodiment, the sole 16 comprises a thermoplastic rubber material, which is advantageously durable and lightweight. An optional slip-resistant sole, such as a rubber sole, provides several advantages, such as increased durability and wear resistance, enhanced protection from dangers such as thorns or burrs, and improved traction on various types of slippery terrain. For example, a rubber sole will provide a dog with enhanced traction on a polished wood floor, thus facilitating the dog's movement and decreasing the risk of injury due to a fall. Furthermore, many dogs suffering from certain conditions such as arthritis find that the increased traction provided by a slip-resistant sole makes it easier to stand up from a sitting or lying condition. Because of its properties as an electrical insulator, a rubber sole also advantageously helps to protect a dog from electric shock, for example from metal grate subway platforms. In one embodiment, the thickness of the sole 16 is between 0.1 inches and 0.5 inches. In another embodiment, the thickness of the sole 16 is between 0.125 inches and 0.4 inches. In yet another embodiment, the thickness of the sole 16 is between 0.15 inches and 0.25 inches.

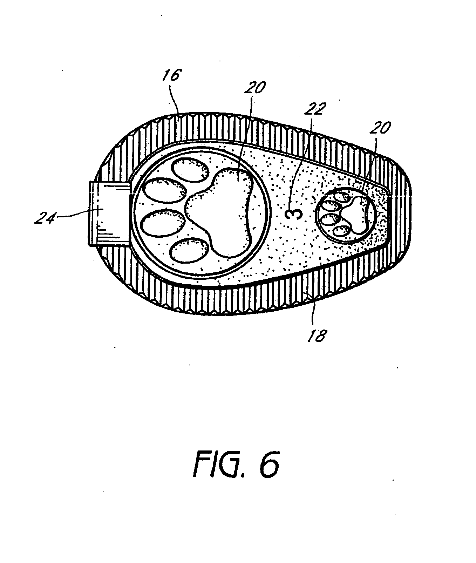

The sole 16 optionally includes tread 18 to further enhance traction. As illustrated in Figure 6, in an exemplary embodiment the tread 18 includes one or more dog paw patterns 20, although other tread patters, such as dog body shaped patters or channels running the length of the sole are used in other embodiments. The tread patterns in the sole advantageously provide the dog with enhanced traction, especially on wet or otherwise slippery surfaces. Additionally, in certain embodiments the sole 16 further includes a size indicator 22 printed thereon. The size indicator 22, which in an exemplary embodiment comprises one or more alphanumeric characters, provides an indication of the size of a particular article of canine footwear. Optionally, if a set of four canine shoes includes two sized for the front feet and two sized differently for the rear feet, an indication is provided on each shoe indicating if it is a front foot shoe or a rear foot shoe.

The canine footwear 10 further includes a shoe wall 14 that is configured to cover an upper portion of the dog's foot. In an exemplary embodiment, the shoe wall 14 optionally comprises a flexible, porous material, such as canvas, nylon or polytetrafluoroethylene, thereby allowing air to pass through the shoe wall 14 to the dog's foot, and allowing moisture to pass from the dog's foot through the shoe wall 14. Such a configuration is particularly advantageous for canine footwear because a dog perspires through its feet. In an exemplary embodiment, the inner surface of the shoe wall 14 comprises a soft fleece-like material or similar material to enhance comfort for the dog's foot. Further, the fleece, fleece-like, or other material provides additional thermal insulation.

Optionally, the shoe wall 14 further includes macroscopic pores to further facilitate passage of air and moisture therethrough. Optionally, the shoe wall is at least partially coated with a material configured to resist water damage, such as a water-resistant material. An example of such a material is carnauba wax. Such surface treatments are particularly advantageous where the canine footwear is to be used to prevent a dog's foot from becoming wet.

Still referring to in exemplary embodiment illustrated in Figures 2 through 6, the shoe wall 14 is secured to a perimeter portion of the sole 16. In one embodiment the shoe wall 14 is sewn to the sole 16, although other attachment mechanisms, such as use of an epoxy or other glue or adhesive, are used in other embodiments. For example, Figures 2 through 6 illustrate the use of a clip 24, such as a metallic or plastic clip, to secure the shoe wall 14 to a toe portion 34 of the sole 16. In other embodiments, additional clips 24 are used at other locations around the perimeter of the sole 16.

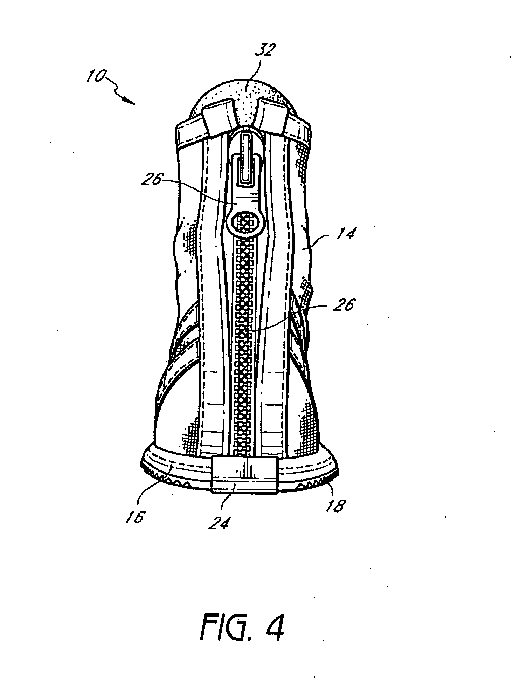

The shoe wall 14 includes an elongate opening to facilitate placement of the dog's foot within the canine footwear 10. In the exemplary embodiment illustrated in Figure 4, the elongate opening includes a zipper 26. However, other mechanisms to open and close the elongate opening are used in other embodiments; examples of such mechanisms include snaps, buttons, clips and hook-and-loop type fasteners. In one embodiment, a zipper with an enlarged pull tab is provided to open and close the elongate opening. An enlarged pull tab makes it easier to handle the zipper and therefore to open or close the footwear when the dog is moving around. In a modified embodiment, the zipper 26 is positioned elsewhere on the canine footwear, such as on the rear (extending upwards from the heel) or the side of the canine footwear.

The canine footwear 10 optionally includes a tongue 32 positioned inside the shoe and over the elongate opening, thereby providing a buffer between the dog's foot and the elongate opening. Aside from providing an added level of comfort, the tongue 32 also optionally protects the dog's foot from the mechanism used to open and close the elongate opening. For example, in embodiments wherein a zipper is used to open and close the elongate opening, the tongue 32 helps to prevent fur on the dog's foot from becoming entangled in the zipper.

In an exemplary embodiment, an upper portion of the shoe wall 14 additionally or optionally includes an ankle cinch 28. For example, in one embodiment the ankle cinch 28 comprises an elastic cord that is configured to be tightened around an upper portion of the dog's ankle. In such embodiments, the ankle cinch includes a pushbutton lock 30 usable to keep the elastic cord in a tightened configuration. Other mechanisms for keeping the elastic cord in a tightened configuration are used in other embodiments. The ankle cinch advantageously helps to keep the canine footwear 10 secured to the dog's foot, and helps to reduce the tendency of the canine footwear 10 to slip, twist, slide or otherwise fall off of the dog's foot during certain activities, such as strenuous physical activities. This ankle cinch configuration also advantageously provides substantially unhindered movement of the dog's leg and foot tendons.

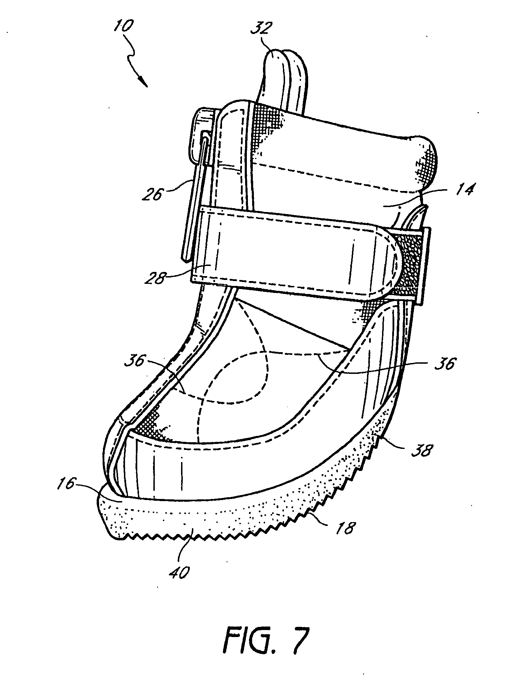

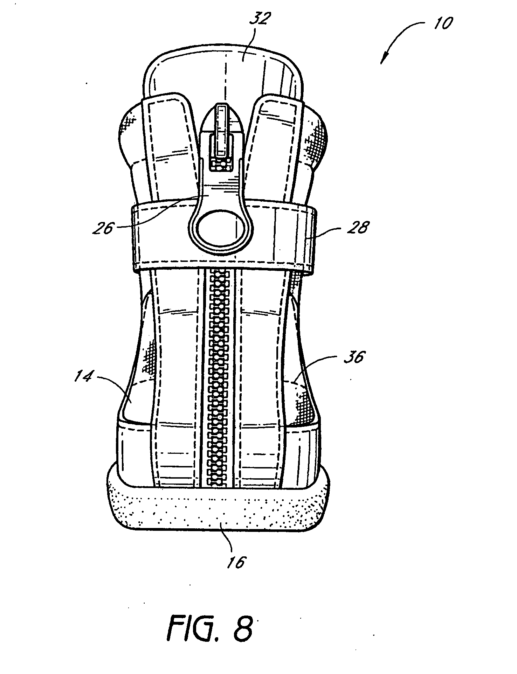

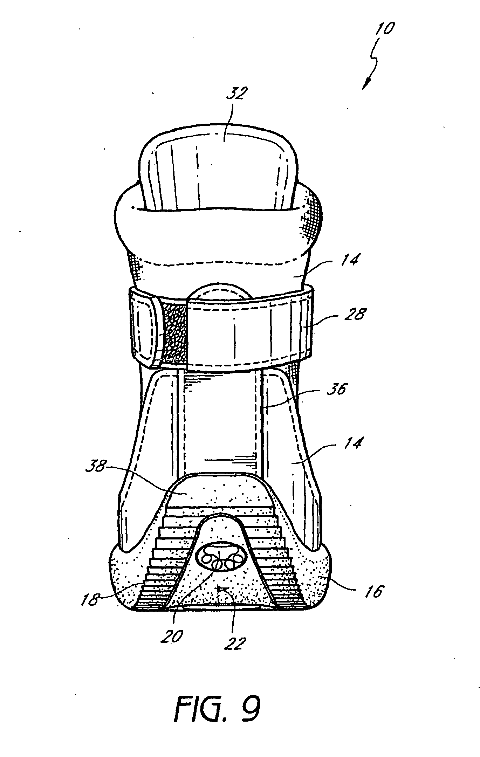

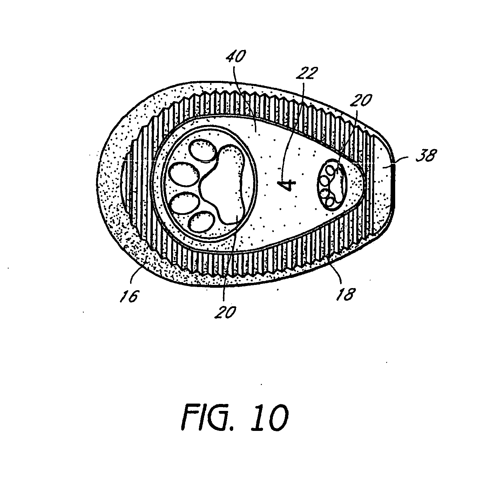

Modified embodiments of canine footwear 10 are illustrated in Figures 7 through 10. Such embodiments include a hook-and-loop type fastener for the ankle cinch 28 instead of an elastic cord. Figure 8 illustrates that the ankle cinch 28 is optionally positioned over the elongate opening, as distinguished from the exemplary configuration using an elastic cord that is illustrated in Figure 4. Furthermore, the modified embodiments illustrated in Figures 7 through 10 illustrate that the shoe wall 14 optionally comprises a plurality of smaller shoe wall panels that are interconnected using, for example, stitching 36. However, other mechanisms are used to interconnect the smaller shoe wall panels in other embodiments.

The modified embodiments illustrated in Figures 7 through 10 included a raised heel portion 38 of the sole 16. For example, in one embodiment the raised heel portion 38 is inclined at an angle between about 5° and about 50° with respect to a foot portion 40 of the sole (also referred to as an intermediate portion of the sole). In another embodiment, the raised heel portion 38 is inclined at an angle between about 5° and about 30° with respect to the foot portion 40 of the sole. Other heel inclination angles are used in other embodiments. Inclining the heel portion 38 of the sole advantageously conforms to the unique anatomy of the canine foot, thereby providing significant comfort advantages with respect to flat-soled canine footwear.

As described herein, in certain embodiments, canine footwear 10 with various sized soles is produced. The size of the sole is optionally provided by an alphanumeric size indicator 22 marked on the sole 16. However, in certain embodiments components of the canine footwear other than or in addition to the sole 16 are provided in various sizes. For example, the height of the shoe wall 14 is adjustable. In one embodiment, the height of the shoe wall 14 is between about one inch and about 5 inches. In another embodiment, the height of the shoe wall 14 is between about 2 inches and about 4 inches. In still another embodiment, the shoe wall 14 is provided with a height configured to reach to a region adjacent to an ankle of the dog.

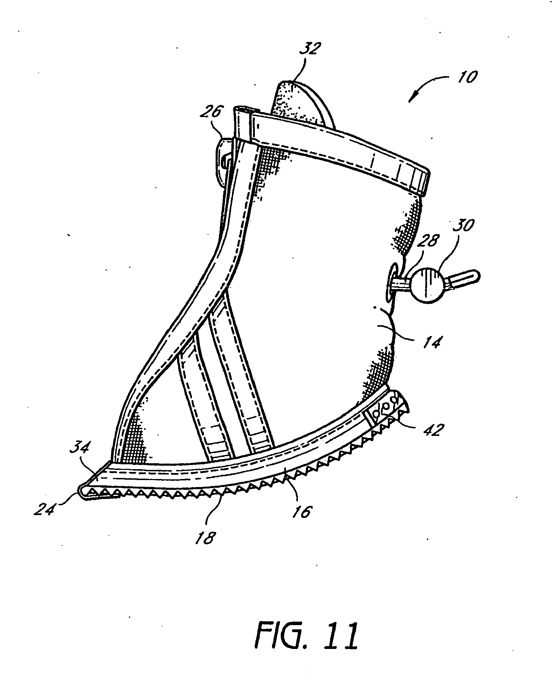

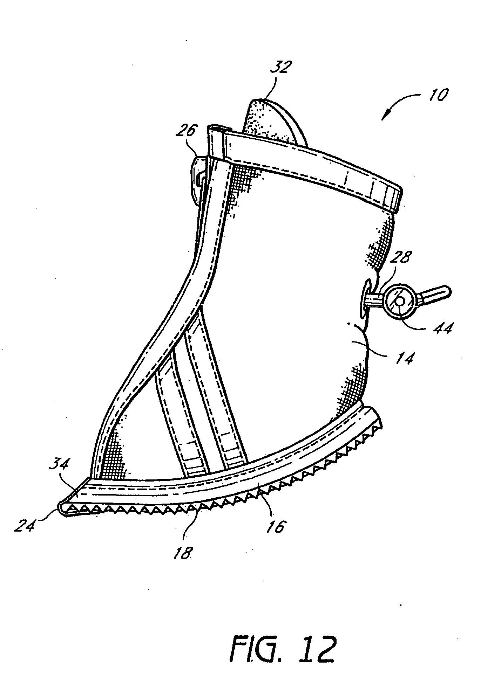

In a modified embodiment, the canine footwear 10 includes lights which enhance visibility of the dog wearing the footwear, for example in low light conditions such as nighttime. For example, this advantageously makes the dog more visible to cars, thereby providing a significant safety enhancement. Figure 11 illustrates a light assembly 42 positioned at the heel of the footwear, while Figure 12 illustrates a light assembly 44 mounted to the pushbutton lock 30 at an ankle portion of the footwear. In an exemplary embodiment, the light assemblies comprise one or more light emitting diodes, although other sources of light are used in other embodiments. In an exemplary embodiment, the lights are activated by a motion sensor, and thus are configured to flash when the dog's foot hits the ground. In an alternative embodiment, the lights flash intermittently according to a timing circuit. In such embodiments, the light assembly includes circuitry to control the flashing of the lights, as well as a power source for the lights.

Generally, a dog's front paws are slightly larger than a dog's rear paws. Therefore, in certain embodiments wherein four dog boots are provided in a kit, the kit comprises two smaller dog boots intended for the dog's rear paws, and two slightly larger dog boots intended for the dog's front paws. For example, in one such embodiment, the width of an intermediate portion of the sole of the dog boots intended for the dog's rear paws is between about 5% and about 40% smaller than the corresponding dimension on the dog boots intended for the dog's front paws. In embodiments wherein the dog boot includes a size indicator, the kit optionally includes packaging that allows the size indicators to be seen through the packaging, thereby making it easier for a consumer to procure appropriately-sized canine footwear.

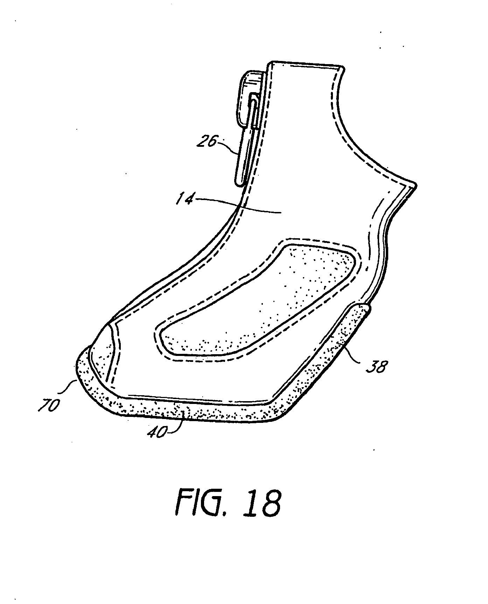

In addition to size differences, other design modifications are optionally included to accommodate differences between the dog's front paws and the dog's rear paws. For example, Figure 18 illustrates an exemplary embodiment in which the dog boot 10 includes a raised toe portion 70 of the sole 16. The raised toe portion 70 provides additional comfort and usability, particularly when provided on a dog boot configured for use on a dog's rear paws. However, in certain applications a dog boot 10 having a raised toe portion 70 is used on both the dog's front and rear paws.

Similarly, in embodiments wherein the sole includes a raised heel portion, the raised heel portion is optionally provided with a different angle of inclination for the front and rear paws. For example, in one embodiment the dog boots configured for use on the dog's front paws are provided with a raised heel portion having a relatively shallow angle of inclination, while the dog boots configured for use on the dog's rear paws are provided with a raised heel portion having a relatively steep angle of inclination. As used herein, a shallow angle of inclination refers to an angle wherein the inclined portion of the sole deviates from the remainder of the sole by a relatively small angular deviation, and a steep angle of inclination refers to an angle wherein the inclined portion of the sole deviates from the remainder of the sole by a relatively large angular deviation.

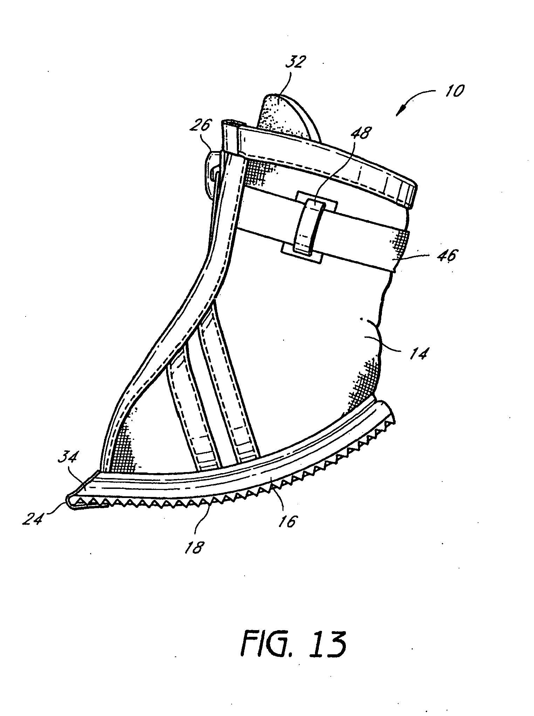

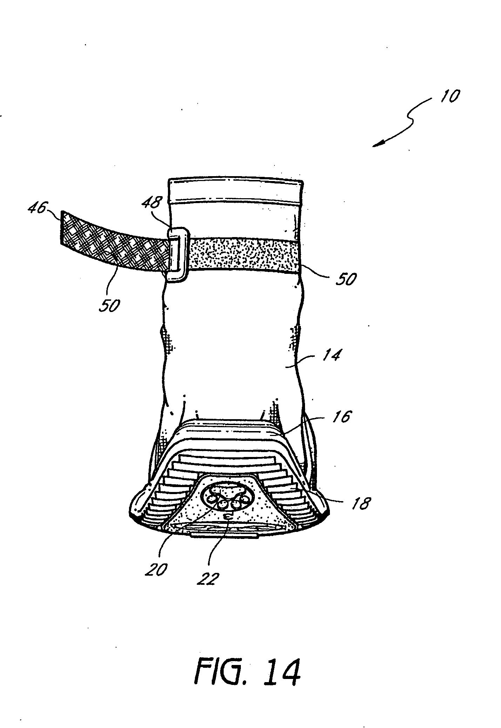

In other modified embodiments, different mechanisms are used to secure the canine footwear 10 to the dog's foot. One example of such a modified embodiment is illustrated in Figures 13 and 14. Figure 13 illustrates a side view of canine footwear 10 having an ankle strap 46 that is positioned around an ankle portion of the footwear. In this exemplary embodiment, the ankle strap 46 is coupled to the shoe wall 14 using a raised loop 48; however, other coupling mechanisms can be used in other embodiments, such as stapling, gluing or sewing. As illustrated in the rear view provided in Figure 14, the ankle strap 46 optionally includes a hook-and-loop type fastener 50 that is used to tighten the strap around the dog's foot. Other tightening mechanisms are used in other embodiments, such as buckles, snaps, and ties.

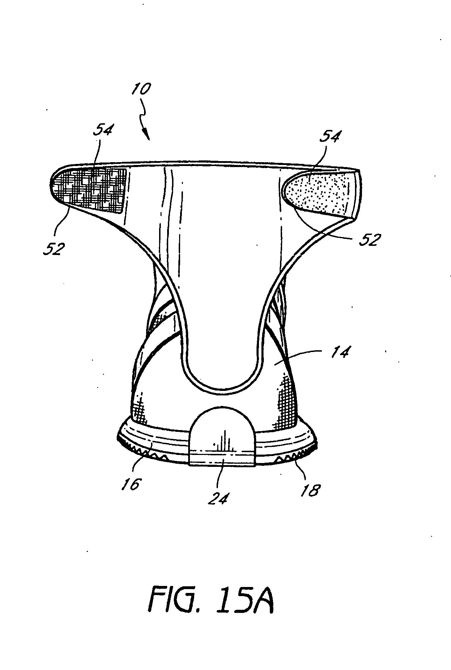

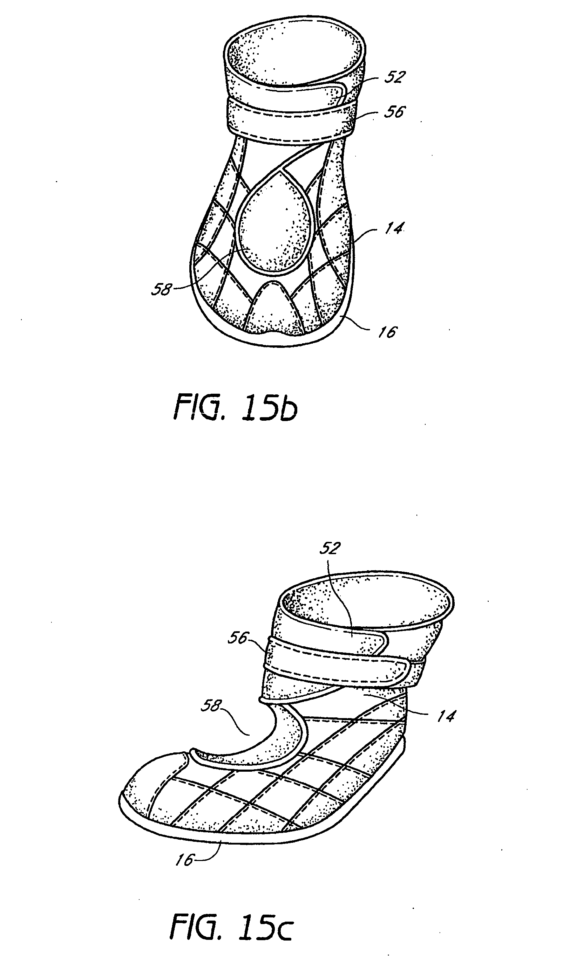

Another example of an embodiment having a modified mechanism to secure the canine footwear 10 to the dog's foot is illustrated in Figures 15A through 15C. Figure 15A illustrates an open front view of canine footwear 10 that does not include a zipper. Instead, the canine footwear 10 illustrated in Figure 15A includes two flaps 52 that are wrapped around the dog's ankle. In an exemplary embodiment, the flaps 52 include hook-and-loop type fasteners 54 that are used to tighten the strap around the dog's ankle. Other tightening mechanisms are used in other embodiments, such as buckles, snaps, or elastic ties. Figures 15B and 15C illustrate a closed front and closed side view of the canine footwear 10 that does not include a zipper. The exemplary embodiments illustrated in Figures 15B and 15C include a secondary strap 56 that is optionally included to further secure the canine footwear 10 around the dog's ankle. As illustrated in Figures 15B and 15C, these embodiments advantageously provide a front opening 58 when the footwear is closed, thereby providing additional ventilation to the dog's foot during use.

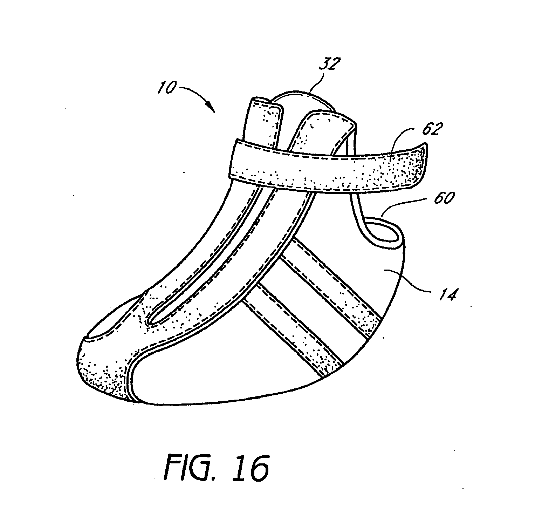

Another modified embodiment of the canine footwear is illustrated in Figure 16. Figure 16 illustrates a perspective view of canine footwear 10 that includes a rear opening 60 that is configured, for example, to accommodate a dog's dew paw. The rear opening 60 also advantageously provides additional ventilation to the dog's paws during use. This embodiment optionally includes ankle straps 62 that are configured to wrap around the dog's angle to assist in securing the canine footwear 10 to the dog's foot. In one embodiment, the straps 62 are connected together using hook-and-loop type fasteners, although other fastening mechanisms are used in other embodiments, such as buckles, snaps and ties. Such embodiments optionally include a zipper positioned on a front portion of the footwear, although in a modified embodiment an elastic portion is provided in place of, or in addition to, the zipper.

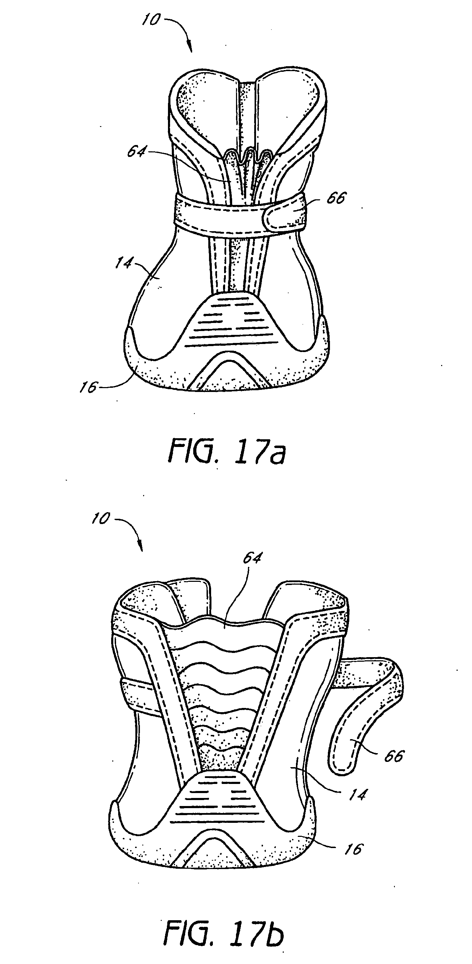

For example, Figures 17A and 17B illustrate an exemplary embodiment of canine footwear 10 wherein the zipper has been replaced with an elastic portion 64. In particular, Figure 17A illustrates the canine footwear 10 in a closed configuration, and Figure 17B illustrates the canine footwear in an open configuration. Such embodiments optionally include an ankle strap 66 to further secure the canine footwear 10 to the dog's foot. As described above, in one embodiment the ankle strap 66 includes hook-and-loop type fasteners, although other types of fasteners are used in other embodiments, such as button, snaps and buckles.

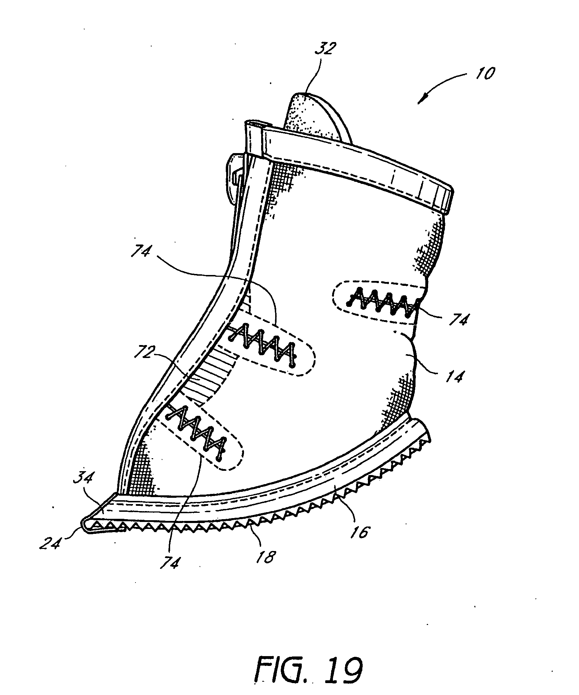

While zippers, elastic bands and hook-and-loop type fasteners have been disclosed herein as usable to secure canine footwear to a dog's foot, other securing mechanisms are used in other embodiments, as illustrated in Figure 19. For example, in one embodiment a canine footwear article 10 includes a compressible material 72 positioned on the inside of the canine footwear 10. In an exemplary embodiment, the compressible material 72 comprises a material such as a foam- or sponge-like substance that presses against the dog's foot when the canine footwear 10 is worn, and thereby provides an improved secure fit between the dog's foot and the canine footwear 10. In such embodiments, the compressible material 72 is positioned inside and is fastened to the shoe wall 14. Optionally, the compressible material comprises multiple separate pieces of material. For example, in an embodiment wherein the canine footwear 10 includes a front zipper, separate pieces of compressible material are positioned on either side of the zipper.

Still referring to Figure 19, the canine footwear 10 optionally or additionally includes one or more embedded elastic bands 74 incorporated into the shoe wall 14. Similar to the compressive material 72, the embedded elastic bands 74 cause the shoe wall 14 to more closely fit against the dog's foot, and thereby provide an improved secure fit between the dog's foot and the canine footwear 10. In the exemplary embodiment illustrated in Figure 19, embedded elastic bands 74 are positioned in an ankle region of the canine footwear 10, as well as in a toe region of the canine footwear 10. In other embodiments, the embedded elastic bands 74 are alternatively or additionally placed elsewhere on the canine footwear. Because the embedded elastic bands 74 do not include an external cinching, tightening or fastening mechanism, they advantageously are resistant to the dog interfering with their operation by biting, chewing or otherwise pulling thereon.

### Scope of the Invention

While the foregoing detailed description discloses several embodiments of the present invention, it should be understood that this disclosure is illustrative only and is not limiting of the present invention. It should be appreciated that the specific configurations and operations disclosed can differ from those described above, and that the methods described herein can be used in contexts other than canine footwear.

## Claims

1. A dog shoe configured to be worn by a dog, the shoe comprising:
a rubberized sole sized for a foot of a dog, the rubberized sole having an exterior portion and an upper portion opposite the exterior portion, and further including a heel portion and a toe portion, wherein the heel portion is raised in relation to the toe portion;
a shoe wall that comprises a flexible material and that is coupled to at least a perimeter portion of the upper portion of the rubberized sole, wherein the shoe wall includes an elongate opening along an upper portion thereof;
a zipper that is mounted on opposite sides of the elongate opening in the upper portion of the shoe wall, and that is configured to open and close an adjustable ankle opening in the upper portion of the shoe wall; and
an elastic ankle cinch that is mounted to the upper portion of the shoe wall, and that is configured to cinch open and close the adjustable ankle opening.

2. The dog shoe of Claim 1, wherein the rubberized sole further comprises an intermediate portion positioned between the toe portion and the heel portion, and wherein the toe portion and the heel portion are raised with respect to the intermediate portion.

3. The dog shoe of Claim 1 or 2, further comprising a lighting assembly positioned on the heel portion of the rubberized sole.

4. The dog shoe of Claim 1 or 2, further comprising a lighting assembly coupled to the elastic ankle cinch.

5. The dog shoe of any preceding claim, wherein the rubberized sole has a heel inclination angle between about 5° and about 50°.

6. The dog shoe of any preceding claim, wherein the exterior portion of the rubberized sole includes a numbered size indicator that provides an indication of paw size the dog shoe will fit.

7. The dog shoe of any preceding claim, wherein the exterior portion of the rubberized sole includes an indicator that provides an indication as to whether the shoe is intended for a front dog foot or a rear dog foot.

8. The dog shoe of any preceding claim, wherein the shoe wall is attached to the rubberized sole using an adhesive.

9. The dog shoe of any one of Claims 1 to 7, wherein the shoe wall is sewn onto the rubberized sole.

10. The dog shoe of any preceding claim, wherein the shoe wall comprises nylon.

11. The dog shoe of any preceding claim, wherein the shoe wall includes a plurality of ventilation holes.

12. The dog shoe of any preceding claim, wherein at least a portion of the dog shoe wall is coated with a water resistant material or coating.

13. The dog shoe of any one of Claims 1 to 11, wherein at least a portion of the dog shoe wall is coated at least in part with carnauba wax.

14. The dog shoe of any preceding claim, wherein the shoe wall has a height between about 1 inch and about 5 inches.

15. The dog shoe of any one of Claims 1 to 13, wherein the shoe wall has a height sized to reach to a region adjacent to an ankle of the dog.

16. A canine footwear apparatus comprising:
a rubber sole sized to fit a dog, the rubber sole having a dog toe portion and a dog heel portion opposite the dog toe portion, wherein the dog heel portion is elevated with respect to the toe portion to accommodate a dog's anatomy;
an upper shoe wall fastened to a perimeter portion of the sole and forming an upper ankle opening, wherein the upper shoe wall is shaped to allow the footwear apparatus to be positioned on a dog foot, and wherein the upper shoe wall includes a first wall portion and a second wall portion, wherein the first and second wall portions are at least partially separated; and
a fastener configured to secure the upper shoe first wall portion to the upper shoe second wall portion.

17. The canine footwear apparatus of Claim 16, further comprising a compressible material positioned on an interior portion of the shoe wall.

18. The canine footwear apparatus of Claim 16 or 17, further comprising an elastic band embedded within the shoe wall.

19. The canine footwear apparatus of any one of Claims 16 to 18, wherein the first and second wall portions are separated by an opening.

20. The canine footwear apparatus of any one of Claims 16 to 19, wherein the rubber sole has a heel inclination angle between about 5° and about 50°.

21. The canine footwear apparatus of any one of Claims 16 to 19, wherein the rubber sole has a heel inclination angle between about 5° and about 30°.

22. The canine footwear apparatus of any one of Claims 16 to 21, wherein the fastener is a zipper.

23. The canine footwear apparatus of any one of Claims 16 to 21, wherein the fastener is an elastic portion that couples the upper shoe first wall portion to the upper shoe second wall portion.

24. The canine footwear apparatus of any one of Claims 16 to 21, wherein the fastener is a hook-and-loop type fastener.

25. The canine footwear apparatus of any one of Claims 16 to 21, wherein the fastener is a hook-and-loop type fastener that is configured to leave an exposed front opening when fastened.

26. The canine footwear apparatus of any one of Claims 16 to 21, further comprising an elastic ankle cinch coupled to the upper ankle opening, wherein the elastic ankle cinch is configured to adjust a size of the upper ankle opening.

27. The canine footwear apparatus of any one of Claims 16 to 21, further comprising an ankle cinch coupled to the upper ankle opening, wherein:
the ankle cinch is configured to adjust a size of the upper ankle opening; and
the ankle cinch includes a hook-and-loop type fastener.

28. The canine footwear apparatus of any one of Claims 16 to 27, wherein the exterior portion of the rubberized sole includes an indicator that provides an indication as to whether the shoe is intended for a front dog foot or a rear dog foot.

29. The canine footwear apparatus of any one of Claims 16 to 27, wherein the rubber sole has a tread pattern.

30. The canine footwear apparatus of any one of Claims 16 to 27, wherein the rubber sole has a tread pattern having a dog paw shape.
